# EUROPÄISCHE PATENTSCHRIFT

(11) **EP 1 388 596 B1**
(45) Veröffentlichungstag und Bekanntmachung des Hinweises auf die Patenterteilung: **16.03.2011**
(21) Anmeldenummer: 03017168.0
(22) Anmeldetag: 29.07.2003
(51) Int. Cl.: C25D 13/22

(54) **Anlage zur kataphoretischen Tauchlackierung von Gegenständen**
Installation for the cataphoretic painting of objects
Installation pour la peinture électrophorétique cathodique des objets

(30) Priorität: 01.08.2002 DE 10235117
(43) Veröffentlichungstag der Anmeldung: 11.02.2004
(73) Patentinhaber: Eisenmann AG, 71032 Böblingen (DE)
(72) Erfinder: Katefidis, Apostolos, 71116 Gärtringen (DE); Mai, Werner, 71093 Weil im Schönbuch (DE)
(74) Vertreter: Ostertag, Ulrich

(56) Entgegenhaltungen:
- EP-A- 0 271 924
- EP-A- 0 504 939
- EP-A- 1 138 806
- WO-A-87/05340
- DE-A1- 2 847 172
- DE-A1- 19 534 534
- US-A- 4 107 016

## Beschreibung

Die Erfindung betrifft eine Anlage zur kataphoretischen Tauchlackierung von Gegenständen, insbesondere von Fahrzeugkarosserien, nach dem Oberbegriff des Patentanspruchs 1.

Bei älteren Anlagen zur kataphoretischen Tauchlackierung von Gegenständen waren die Elektrodialyseeinrichtungen, welche für einen im wesentlichen konstanten pH- bzw. Leitwert der Lackflüssigkeit sorgten, in das Lacktauchbecken selbst eingebaut. Die entsprechenden Dialysezellen bestanden aus einem Gehäuse, das eine Austauschermembrane trug, die Anionen permeieren ließ, jedoch für Kationen und Lackfestkörper undurchlässig war. Die Austauschermembran umgab dabei die Anoden, die für den kataphoretischen Beschichtungsvorgang verantwortlich waren. Diese Bauweise führte zwangsläufig dazu, daß die Anoden geradlinige Körper waren. Da jedoch andererseits die zu beschichtenden Gegenstände selbst eine unregelmäßig geformte Kontur, also z. B. gekrümmte Oberflächen besitzen, ergaben sich in den genannten bekannten Anlagen inhomogene elektrische Felder zwischen der Anode und den zu beschichtenden Gegenständen mit der Konsequenz, daß die Beschichtungsdicke nur schwer in allen Bereichen des zu lackierenden Gegenstandes konstant gehalten werden konnte. Um zu hohe lokale Stromdichten zu vermeiden, musste außerdem die Beschichtungsgeschwindigkeit begrenzt werden.

Die kataphoretisch arbeitenden Anlagen mit in das Lacktauchbecken eingebauten Elektrodialyseeinrichtungen hatten bestimmte weitere Nachteile, die dazu geführt haben, daß bei jüngeren bekannten Anlagen die Elektrodialyseeinrichtung aus dem Lacktauchbecken entfernt und außerhalb von diesem mit einer eigenen Spannungsquelle angeordnet wurden. Beispiele für derartige Anlagen, die der eingangs genannten Art entsprechen, sind in der DE 32 43 770 A1, der JP 55-00 6452 A und der JP 55-05 0493 A beschrieben. Die Auslagerung der Elektrodialyseeinrichtung aus dem Lacktauchbecken änderte bei diesen letztgenannten Anlagen jedoch nichts daran, daß die Anoden geradlinig verlaufende Körper waren. Auch diese Anlagen wiesen daher die oben beschriebenen Nachteile auf.

Mit der Entfernung der bei der kathodischen Elektrotauchlackierung freigesetzten Säure befasst sich auch die DE 195 34 534 A1, allerdings eher unter dem Gesichtspunkt geeigneter Elektrodenmaterialien. Die Geometrie der Anoden bei einem im Labormaßstab durchgeführten Ausführungsbeispiel ist dort ebenfalls eben.

Aufgabe der vorliegenden Erfindung ist es, eine Anlage der eingangs genannten Art so weiterzubilden, daß konstantere Schichtdicken auf den zu lackierenden Gegenständen und höhere Beschichtungsgeschwindigkeiten erzielt werden können.

Diese Aufgabe wird erfindungsgemäß dadurch gelöst, daß
d) die Anode ein Querschnittsprofil aufweist, das in mindestens einem Abschnitt als gekrümmte Fläche der Kontur der zu behandelnden Gegenstände so angepasst ist, daß sie der Kontur dieser Gegenstände annähernd parallel folgt; und
e) die Anode ein U-förmiges Profil mit zwei seitlichen Abschnitten und einem unteren, die seitlichen Abschnitte miteinander verbindenden Abschnitt besitzt.

Die Erfindung fußt auf der Erkenntnis, daß sich durch die Auslagerung der Elektrodialyseeinrichtung aus dem Lacktauchbecken eine völlig neue Freiheit in den Gestaltungsmöglichkeiten der Anode ergibt: Diese Anoden können nunmehr nämlich in praktisch beliebiger Weise gekrümmt und so gestaltet werden, daß ihr Abstand zu den zu beschichtenden Oberflächen der Gegenstände annähernd konstant ist. Dies hat zur Folge, daß der Stromlinienverlauf zwischen Anode und zu beschichtendem Gegenstand im wesentlichen homogen ist; lokale Variationen der Beschichtungsstromdichte werden weitgehend vermieden. Hierdurch lassen sich nicht nur konstantere Schichtdicken sondern auch höhere Beschichtungsgeschwindigkeiten erzielen.

Erfindungsgemäß ist die Anode ein U-förmiges Profil mit zwei seitlichen Abschnitten und einem unteren, die seitlichen Abschnitte miteinander verbindenden Abschnitt. Auf diese Weise können die zu lackierenden Gegenstände im Lacktauchbad an drei Seiten von der Anode umgeben werden, wobei ausschließlich die Oberseite frei bleibt, um den Gegenstand in das Lacktauchbad eintauchen zu können.

Da die zu beschichtenden Oberflächen von vielen Gegenständen, insbesondere von Fahrzeugkarosserien, von außen her gesehen konvex sind, empfiehlt sich in diesen Fällen, daß die seitlichen Abschnitte der Anode von den Gegenständen aus gesehen konkav gekrümmt sind.

Die Anoden können zumindest in ihrem oberen Bereich aus Blech bestehen. Dies ist verhältnismäßig kostengünstig und sorgt ebenfalls für gleichmäßige Stromdichteverteilungen.

Zumindest in ihrem unteren Bereich sollte die Anode aus einem für die Lackflüssigkeit durchlässigen Material bestehen, damit die Lackflüssigkeit in dem von der Anode umgebenen Raum mit derjenigen Lackflüssigkeit kommunizieren kann, die sich in dem außerhalb der Anode liegenden Raum befindet.

Als für Lackflüssigkeit durchlässiges Material kommen vorzugsweise ein Maschendraht- oder Siebgeflecht, ein Rost oder eine Mehrzahl von in Abstand zueinander angeordneten Stäben infrage.

Bei einer besonders bevorzugten Ausführungsform der Erfindung besteht die Anode zumindest teilweise aus iridiumbeschichtetem Titan. Damit hat es folgende Bewandtnis: Da bei einer erfindungsgemäßen Tauchlackieranlage die Elektrodialyseeinrichtung nicht in dem Lacktauchbecken selbst angeordnet sind, ist die Anode nicht mehr, wie bei den älteren Anlagen, vor einem unmittelbaren Kontakt mit der Lackflüssigkeit geschützt und daher korrosionsgefährdet. Eine aus iridiumbeschichteten Titan bestehende Anode unterliegt dieser Korrosion nicht. Außerdem wird durch dieses Material verhindert, daß Anodenmaterial in die Lackflüssigkeit übergeht.

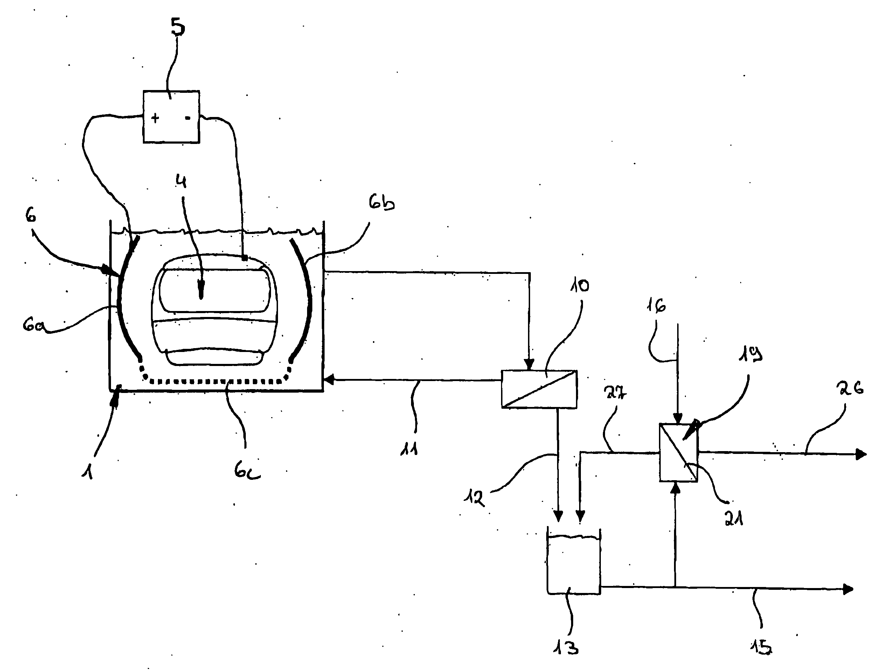

Ein Ausführungsbeispiel der Erfindung wird nachfolgend anhand der Zeichnung näher erläutert; die einzige Figur zeigt schematisch eine Anlage zur kataphoretischen Tauchlackierung von Fahrzeugkarosserien.

Die Anlage umfasst ein Lacktauchbecken 1, das bis zu einem bestimmten Spiegel mit Lackflüssigkeit angefüllt ist. Die zu lackierenden Fahrzeugkarosserien 4 werden mit Hilfe eines nicht dargestellten Fördersystems senkrecht zur Zeichenebene geführt und dabei zuerst in das Lacktauchbecken 1 eingetaucht, dort in noch zu beschreibender Weise beschichtet und sodann Spülstationen zugeführt, die in der Zeichnung nicht mehr dargestellt sind.

Die kataphoretische Beschichtung im Lacktauchbecken 1 wird mit Hilfe einer Beschichtungsstromquelle 5 durchgeführt, mit deren Minuspol die Fahrzeugkarosserie 4 während der Passage durch die Lackflüssigkeit verbunden ist. Außerdem taucht in die Lackflüssigkeit des Lacktauchbeckens 1 eine Anode 6 ein, die mit dem Pluspol der Beschichtungsstromquelle 5 verbunden ist. Die genaue Bauweise und Ausgestaltung dieser Anode 6 wird weiter unten beschrieben.

Ein Teil der Lackflüssigkeit wird ständig aus dem Lacktauchbecken 1 einer Ultrafiltrationseinheit 10 zugeführt. Das in der Ultrafiltrationseinheit 10 gewonnene Retentat wird über eine Leitung 11 wieder in das Lacktauchbecken 1 zurückgegeben, während das Permeat über eine weitere Leitung 12 in einen Arbeitsbehälter 13 gebracht wird. Das sich hier sammelnde Permeat stimmt in seiner ionischen Zusammensetzung mit derjenigen der Lackflüssigkeit im Lacktauchbecken 1 überein, enthält jedoch keine Lackfestkörper.

Das Permeat wird dem Arbeitsbehälter 13 mit Hilfe einer nicht dargestellten Pumpe entnommen und zu einem Teil über eine Leitung 15 den verschiedenen nicht dargestellten Spülstationen als Spülflüssigkeit zugeführt.

Das sich im Arbeitsbehälter 13 sammelnde Permeat der Ultrafiltrationseinheit 10 wird zusätzlich einer Elektrodialysebehandlung unterzogen mit dem Ziel, die Säurekonzentration abzureichern und so den pH- bzw. Leitwert des Permeates und damit letztendlich der Lackflüssigkeit in vorbestimmten Grenzen zu halten. Hierzu ist eine Elektrodialysezelle 19 vorgesehen, welcher ebenfalls mit Hilfe einer nicht dargestellten Pumpe ein Teil des sich im Arbeitsbehälter 13 sammelnde Permeats der Ultrafiltrationseinheit 10 zugeführt.

Der innere Aufbau der Elektrodialysezelle 19 ist in der Zeichnung nur sehr schematisch dargestellt. Sie enthält mindestens eine ionenspezifische Austauschermembran 21 sowie auf gegenüberliegenden Seiten der Austauschermembran 21 angeordnet eine Kathode und eine Anode, die an eine Dialysespannungsquelle angeschlossen sind. Kathode, Anode und Dialysespannungsquelle sind in der Zeichnung aus Übersichtlichkeitsgründen nicht dargestellt. Das der Elektrodialysezelle 19 zugeführte Permeat durchfließt im Inneren der Elektrodialysezelle 19 einen Raum, der auf einer Seite von der Austauschermembran 21 begrenzt ist. Dem auf der gegenüberliegenden Seite der Austauschermembran 21 liegende Raum der Elektrodialysezelle 19 wird über eine Leitung 16 Wasser mit geringer Leitfähigkeit zugeführt. Dieses wird beim Durchgang durch die Elektrodialysezelle 19 in bekannter Weise mit Anionen angereichert, die über die Austauschermembran 21 aus dem Permeat übergetreten sind.

Das so angereicherte Wasser wird über eine Leitung 26 der Abwasseraufbereitung zugeführt. Das an Säure abgereicherte Permeat dagegen wird über eine weitere Leitung 27 wieder in den Arbeitsbehälter 13 eingebracht.

Die in dem Lacktauchbecken 1 angeordnete Anode 6 besitzt im Schnitt senkrecht zur Bewegungsrichtung der Fahrzeugkarosserien 4 ein im wesentlichen U-förmiges Profil. Sie ist aus drei Abschnitten 6a, 6b und 6c zusammengesetzt, die alle aus iridiumbeschichtetem Titan hergestellt sind. Die seitlich der Fahrzeugkarosserie 4 liegenden Abschnitte 6a, 6b der Anode 6 bestehen aus Blechmaterial und sind so gekrümmt, daß sie der Form der zu beschichtenden Fahrzeugkarosserie 4 etwa parallel folgen. Der die beiden seitlichen Abschnitte 6a, 6b verbindende untere Abschnitt 6c der Anode 6 folgt ebenfalls der Kontur der Fahrzeugkarosserie 4 in diesem Bereich etwa parallel, ist aber aus einem Maschendrahtgeflecht hergestellt. Alternativ können hier auch perforierte Bleche, Siebe- oder Gitterstrukturen sowie parallel verlaufende Stäbe eingesetzt werden. Entscheidend ist, daß durch den unteren Abschnitt 6c der Anode 6 eine Verbindung zwischen der innerhalb der Anode 6 und der außerhalb der Anode 6 liegenden Lackflüssigkeit möglich ist.

Die oben beschriebene Lackieranlage arbeitet wie folgt:

Die Fahrzeugkarosserien 4 werden in die im Lacktauchbecken 1 befindliche Lackflüssigkeit eingetaucht und dort im elektrischen Feld zwischen ihnen und der Anode 6 kataphoretisch beschichtet. Da der Abstand zwischen den zu beschichtenden Oberflächen der Fahrzeugkarosserien 4 und der Anode 6 überall im wesentlichen konstant ist, ist das elektrische Feld, in dem die Beschichtung stattfindet, in der Umgebung der Fahrzeugkarosserie 4 weitgehend homogen. Auf diese Weise können gleichmäßigere Schichtdicken und höhere Schichtdicken in kürzerer Zeit erreicht werden als bisher.

Nach der Beschichtung werden die Fahrzeugkarosserien 4 aus dem Lacktauchbad 1 wieder ausgehoben und in die nicht dargestellten Spülstationen eingebracht, wo die anhaftende Lackflüssigkeit abgespült wird.

Der Austrag an Pigmenten aus der Lackflüssigkeit, die sich im Lacktauchbecken 1 befindet, wird durch Zugabe entsprechender Pigmente kompensiert.

Während der kataphoretischen Beschichtung der Fahrzeugkarosserien 4 im Lacktauchbad 1 steigt der Säuregehalt in der Lackflüssigkeit und damit auch in dem die Ultrafiltrationseinheit 10 verlassenden Permeat an. Wird ein vorgegebener Sollwert überstiegen, wird Permeat über die Elektrodialysezelle 19 umgewälzt. Dabei wird dem Permeat Säure entzogen, der pH- bzw. Leitwert also wieder in den zulässigen Bereich gebracht. Das Permeat, welches auf diese Weise in seiner Säurekonzentration reduziert wurde, gelangt über die Spülstationen, in denen es als Spülflüssigkeit benutzt wird, wieder in das Lacktauchbecken 1 zurück, so daß sich auch dort die in der Elektrodialysezelle 19 vorgenommene Säureabreicherung auswirkt.

Dadurch, daß der Elektrodialysevorgang aus dem Lacktauchbecken 1 ausgelagert ist und die Anode 6 daher nicht mehr von einer Elektrodialysezelle umgeben sein muß, gelingt es, die Anode 6 in der geschilderten Weise an die Form der zu beschichtenden Fahrzeugkarosserie 4 anzupassen.

## Patentansprüche

1. Anlage zur kataphoretischen Tauchlackierung von Gegenständen, insbesondere von Fahrzeugkarosserien, mit
a) einem Lacktauchbecken (1), das mit einer Lackflüssigkeit angefüllt ist, in welche die Gegenstände (4) eintauchbar sind;
b) einer Beschichtungsspannungsquelle (5), mit deren Minuspol die eingetauchten Gegenstände (4) verbindbar sind und deren Pluspol mit mindestens einer in die im Lacktauchbecken (1) befindliche Lackflüssigkeit eintauchenden Anode (6) verbunden ist;
c) einer Elektrodialyseeinrichtung (19), die außerhalb des Lacktauchbeckens (1) angeordnet ist und mit deren Hilfe die sich beim Beschichtungsvorgang bildende Säure aus der Lackflüssigkeit entfernt werden kann, so daß der Säuregehalt in der Lackflüssigkeit innerhalb eines zulässigen Bereiches bleibt,
**dadurch gekennzeichnet, daß**
d) die Anode (6) ein Querschnittsprofil aufweist, das in mindestens einem Abschnitt (6a, 6b, 6c) als gekrümmte Fläche der Kontur der zu behandelnden Gegenstände (4) so angepaßt ist, daß sie der Kontur dieser Gegenstände (4) annähernd parallel folgt; und
e) die Anode (6) ein U-förmiges Profil mit zwei seitlichen Abschnitten (6a, 6b) und einem unteren, die seitlichen Abschnitte (6a, 6b) miteinander verbindenden Abschnitt (6c) besitzt.

2. Anlage nach Anspruch 1, **dadurch gekennzeichnet,**
**daß** die seitlichen Abschnitte (6a, 6b) der Anode (6) von den Gegenständen (4) aus gesehen konkav gekrümmt sind.

3. Anlage nach einem der vorhergehenden Ansprüche,
**dadurch gekennzeichnet, daß** die Anode (6) zumindest in ihrem oberen Bereich aus Blech besteht.

4. Anlage nach einem der vorhergehenden Ansprüche,
**dadurch gekennzeichnet, daß** die Anode (6) zumindest in ihrem unteren Bereich aus einem für die Lackflüssigkeit durchlässigen Material besteht.

5. Anlage nach Anspruch 4, **dadurch gekennzeichnet,**
**daß** das für die Lackflüssigkeit durchlässige Material von einem Maschendraht- oder Siebgeflecht, einem Rost oder einer Mehrzahl von in Abstand voneinander angeordneten Stäben gebildet ist.

6. Anlage nach einem der vorhergehenden Ansprüche,
**dadurch gekennzeichnet, daß** die Anode (6) zumindest teilweise aus iridiumbeschichtetem Titan besteht.

## Claims

1. An installation for the cataphoretic dip coating of articles, in particular vehicle bodies, comprising
a) a dip tank (1), which is partially filled with a coating liquid, into which the articles (4) can be immersed;
b) a coating voltage source (5), to the negative terminal of which the immersed articles (4) can be-connected and the positive terminal of which is connected with at least one anode (6) immersed in the coating liquid present in the dip tank (1);
c) an electrodialysis apparatus (19), which is arranged outside the dip tank (1) and by means of which the acid formed during the coating operation can be removed from the coating liquid, such that the acid content in the coating liquid remains within an admissible range,
**characterised in that**
d) the anode (6) has a cross-sectional profile which, in at least one portion (6a, 6b, 6c), is adapted as a curved surface to the outline of the articles (4) to be treated in such a manner that the anode follows the outline of said articles (4) in approximately parallel manner; and
e) the anode (6) has a U-shaped profile with two lateral portions (6a, 6b) and a lower portion (6c), which joins the laterial portions (6a, 6b) together.

2. An installation according to claim 1, **characterised in that** the lateral portions (6a, 6b) of the anode (6) are concavely curved when viewed from the articles (4).

3. An installation according to one of the preceding claims, **characterised in that**, at least in its upper part, the anode (6) consists of sheet metal.

4. An installation according to one of the preceding claims, **characterised in that**, at least in its lower part, the anode (6) consists of a material permeable to the coating liquid.

5. An installation according to claim 4, **characterised in that** the material permeable to the coating liquid is formed from a wire mesh or screen netting, a grating or a plurality of mutually spaced rods.

6. An installation according to one of the preceding claims, **characterised in that** the anode (6) consists at least in part of iridium-coated titanium.

## Revendications

1. Installation de peinture par immersion cataphorétique d'objets, en particulier de carrosseries de véhicules, comportant
a) un bassin de peinture par immersion (1) qui est rempli d'un liquide de peinture dans lequel les objets (4) peuvent être immergés ;
b) une source de tension de revêtement (5) dont le pôle négatif peut être relié aux objets immergés (4) et le pôle positif à au moins une anode (6) plongeant dans le liquide de peinture qui se trouve dans le bassin de peinture par immersion (1) ;
c) un dispositif d'électrodialyse (19) qui est disposé à l'extérieur du bassin de peinture par immersion (1) et à l'aide duquel l'acide qui se forme lors du procédé de revêtement peut être éliminé du liquide de peinture, de façon que la teneur en acide du liquide de peinture reste à l'intérieur d'une plage admissible,
**caractérisée en ce que**
d) l'anode (6) présente un profil de section qui, au moins dans une portion (6a, 6b, 6c), est adaptée, sous forme de surface courbe, au contour des objets (4) à traiter, de manière à suivre approximativement parallèlement le contour de ces objets (4) ; et
e) l'anode (6) possède un profil en forme de U avec deux portions latérales (6a, 6b) et une portion inférieure (6c) qui relie entre elles les deux portions latérales (6a, 6b).

2. Installation selon la revendication 1, **caractérisée en ce que** les portions latérales (6a, 6b) de l'anode (6) présentent une courbure concave, vu depuis les objets (4).

3. Installation selon une des revendications précédentes, **caractérisée en ce que** l'anode (6) est constituée de tôle au moins dans sa partie supérieure.

4. Installation selon une des revendications précédentes, **caractérisée en ce que** l'anode (6) est constituée d'un matériau perméable au liquide de peinture au moins dans sa partie inférieure.

5. Installation selon la revendication 4, **caractérisée en ce que** le matériau perméable au liquide de peinture est formé par un treillis de fils métalliques, un tamis, un grillage ou une pluralité de barreaux disposés à distance les uns des autres.

6. Installation selon une des revendications précédentes, **caractérisée en ce que** l'anode (6) est constituée au moins partiellement de titane revêtu d'iridium.
